# EUROPÄISCHE PATENTSCHRIFT

(11) **EP 1 299 646 B1**
(45) Veröffentlichungstag und Bekanntmachung des Hinweises auf die Patenterteilung: **03.01.2007**
(21) Anmeldenummer: 01949374.1
(22) Anmeldetag: 01.06.2001
(51) Int. Cl.: F04B 17/04, F04B 43/08, F04B 43/09, F04B 9/02, F04B 43/00

(54) **DOSIERPUMPE**
DOSING PUMP
POMPE DE DOSAGE

(30) Priorität: 13.07.2000 DE 10034095
(43) Veröffentlichungstag der Anmeldung: 09.04.2003
(73) Patentinhaber: Lutz Pumpen GmbH, 97877 Wertheim (DE)
(72) Erfinder: Jesse, Gerhard, (DE)
(74) Vertreter: Leine, Sigurd
(86) Internationale Anmeldenummer: PCT/EP2001/006278
(87) Internationale Veröffentlichungsnummer: WO 2002/006670

(56) Entgegenhaltungen:
- FR-A- 1 555 291
- FR-A- 1 586 672
- FR-A- 2 612 995
- GB-A- 2 303 925
- US-A- 5 092 567
- US-A- 5 557 154
- US-A- 6 012 910
- US-A- 6 068 448

## Beschreibung

Die Erfindung betrifft eine Dosierpumpe der im Oberbegriff des Anspruchs 1 genannten Art.

In GB 2 303 925 A ist ein Dämpfungssystem für eine beispielhaft zum Stand der Technik beschriebene oszillierende Pumpe bekannt. Durch die Dämpfung soll die konstruktionsbedingte stoßweise Förderung der Pumpe durch Dämpfung ausgeglichen werden, um so einen ausreichend gleichmäßigen Förderstrom zu ermöglichen, der eine näherungsweise Messung der Förderungsmenge ermöglicht. Die Dämpfungsmittel stellen einen zusätzlichen Aufwand dar und ermöglichen trotz ihrer Dämpfungswirkung keine exakte Messung des Förderstromes. Insbesondere steht der Förderstrom nicht in direkter Beziehung zu der Antriebsbewegung für die Pumpe, so daß Dämpfungsmittel und Meßmittel unabdingbar sind. Die Pumpe selbst stellt also keine Dosierpumpe dar.

Durch FR 1 555 291 ist eine Pumpe bekannt, bei der es sich ebenfalls um eine Vibrationspumpe handelt. Die Pumpe weist eine zylindrische Kammer auf, in der ein Kolben aus magnetisierbarem Material beweglich angeordnet ist. In einem Einlaß in die Kammer, in dem Kolben und in einem Auslaß aus der Kammer befinden sich in Förderrichtung öffnende Rückschlagventile. Der Kolben wird durch eine mit Wechselstrom gespeiste Erregerspule in Schwingungen versetzt. Gleichzeitig ist er in Förderrichtung durch eine Feder vorgespannt. Bei Erregung der Erregerspule fördert der Kolben also stoßweise Flüssigkeit. Schon aus diesem Grunde ist diese bekannte Pumpe als Dosierpumpe ungeeignet. Darüber hinaus sind Undichtigkeiten zwischen Kolben und umgebender Wandung unvermeidbar, so daß der jeweilige Förderhub nicht mit dem Kolbenhob korreliert. Auch dies macht diese bekannte Pumpe als Dosierpumpe ungeeignet.

Dosierpumpen sind allgemein bekannt. Sie dienen zum dosierten und insbesondere gleichmäßigen Transport einer Dosierflüssigkeit in ein anderes Medium, z.B. Wasser. Sie weisen eine Kammer mit einem Einlaßventil in einem Einlaß in die Kammer und einem Auslaßventil in einem Auslaß der Kammer auf. Ein Teil der Wandung der Kammer ist durch eine Membran gebildet, die von einer Antriebseinrichtung hin- und hergehend bewegt wird. Bei einer Bewegung im Sinne einer Vergrößerung des Volumens der Kammer wird Dosierflüssigkeit durch das Einlaßventil in die Kammer angesaugt, während bei einer Bewegung der Membran in umgekehrter Richtung das Volumen der Kammer verringert und so Dosierflüssigkeit aus der Kammer durch das Auslaßventil gefördert wird, wo es dann durch eine Leitung zu einer gewünschten Stelle geführt wird.

Ein Nachteil einer solchen bekannten Dosierpumpe besteht darin, daß das Eintreten der Dosierflüssigkeit in die Kammer beim Ansaugvorgang eine verhältnismäßig lange Zeit in Anspruch nimmt, während der keine Dosierflüssigkeit durch das Auslaßventil in den Auslaß gelangt und abgegeben wird. Andererseits kommt beim Übergang in den Ausstoßvorgang, bei dem die Dosierflüssigkeit aufgrund einer Verringerung des Volumens der Kammer durch das Auslaßventil austritt, die gesamte Dosierflüssigkeit in der Zuleitung zu dem Einlaßventil durch dessen Schließen ruckartig zur Ruhe, was hinsichtlich des Pumpvorganges, der Geräuschentwicklung und des Verschleißes nachteilig ist.

Durch US 1 580 479 ist eine Pumpe bekannt, die eine Kammer aufweist, in die ein Einlaß führt, in dem sich ein Einlaßventil befindet, und aus der ein Auslaß herausführt, in dem sich ein Auslaßventil befindet. Die Kammer ist durch eine hin- und herbewegliche und mit einer Antriebseinrichtung verbundene Platte in zwei Teilkammern unterteilt. In der Platte befindet sich ein koaxialer Durchlaß, an dem ein Trennventil angeordnet ist, welches in Förderrichtung öffnet und die beiden Teilkammern verbindet. Die Teilkammern weisen miteinander fluchtende, im wesentlichen zylindrische, längenveränderliche Außenwandungen auf. Die Antriebseinrichtung ist als Kurbeltrieb ausgebildet, der über eine Pleuelstange die zwischen den beiden Teilkammern angeordnete Platte hin- und herbewegt. Bei dem Bewegungshub in Richtung auf den Auslaß wird Flüssigkeit aus der diesem benachbarten Teilkammer herausgedrückt, während gleichzeitig die dem Einlaß benachbarte Teilkammer verkleinert und somit Flüssigkeit durch das Einlaßventil angesaugt wird. Beim Rückwärtshub bewegt sich die trennende Platte in Richtung auf den Einlaß, so daß Flüssigkeit aus der dieser benachbarten Teilkammer in die dem Auslaß benachbarte Teilkammer gelangt, aus der während dieser Zeit keine Flüssigkeit aus dem Auslaß gefördert wird. Einem sinusförmigen Förderhub folgt also immer ein sinusförmiger Saughub. Wegen dieser Ungleichmäßigkeit der Förderung ist diese bekannte Pumpe als Dosierpumpe ungeeignet.

Der Erfindung liegt die Aufgabe zugrunde, eine Dosierpumpe zu schaffen, die ein gleichmäßiges und insbesondere stoßfreies und geräuscharmes sowie genaues Fördern von Flüssigkeit ermöglicht.

Die der Erfindung zugrundeliegende Aufgabe wird durch die im Kennzeichen des Anspruchs 1 angegebene Lehre gelöst.

Gemäß der Erfindung weisen die Teilkammern miteinander fluchtende, im wesentlichen zylindrische, in ihrer Ausdehnung in Achsrichtung dehn- und/oder stauchbare, also veränderbare Außenwandungen auf, wobei das Trennmittel durch ein mit den Außenwandungen dicht verbundenes Trennteil gebildet ist, in dem vorzugsweise koaxial das Trennventil angeordnet ist und mit dem die Antriebseinrichtung wirkungsverbunden ist. Gleitende Teile und ein damit verbundener Verschleiß sind vermieden.

Aufgrund der dichten Verbindung des Trennteiles mit den Außenwandungen der Kammer können keine Undichtigkeiten zwischen den Teilkammern auftreten, so daß der Förderstrom genau den Bewegungen des Trennteils entspricht. Die erfindungsgemäße Pumpe ist in hohem Maße als Dosierpumpe geeignet.

Gemäß einem weiteren Merkmal der Erfindung besteht das Trennteil aus hartem Material und weist ein zur Pumprichtung koaxiales Außengewinde auf, das mit einem Innengewinde eines Übertragungsteils in Eingriff ist, das von der Antriebseinrichtung drehangetrieben ist. Dabei sind Mittel zur wiederkehrenden Umkehrung der Drehrichtung des Übertragungsteils vorgesehen, so daß nach einer Dreh- und Schraubbewegung des Übertragungsteils in Förderrichtung eine Rückbewegung des Trennteils entgegen der Förderrichtung erfolgt, also durch eine Schraubbewegung zur Bewegung des Trennteils in Förderrichtung und entgegen der Förderrichtung. Der erfindungsgemäße Antrieb und somit der Fördervorgang ist somit gleichmäßig, genau und geräuscharm.

Die Schlauchteile sind zweckmäßigerweise balgförmig. Um eine Querschnittsvergrößerung oder Querschnittsverengung während des Pumpvorganges zu vermeiden, weisen die Schlauchteile zweckmäßigerweise in Umfangsrichtung nicht dehnbare Mittel auf, die durch eine in den Schlauchteilen angeordnete, in Umfangsrichtung nicht dehnbare, vorzugsweise als Kreuzgewebe ausgebildete Bewehrung gebildet sein können. Eine andere Ausführungsform der Erfindung besteht darin, daß die nicht dehnbaren Mittel durch in axialem Abstand mit den zylindrischen Außenwandungen verbundene Ringe gebildet sind, die vorzugsweise auf der Außenseite der Außenwandungen angeordnet sind. Die Ringe können aus einem beliebigen geeigneten Material bestehen, beispielsweise aus Kunststoff. Eine Weiterbildung sieht jedoch vor, daß die Ringe aus Metall bestehen und mit der Außenseite der Schlauchteile durch Vulkanisation verbunden sind. Diese Ausführungsform ist einfach und damit kostengünstig herstellbar.

Bei balgförmiger Ausbildung der im wesentlichen zylindrischen Außenwandungen sind die Ringe vorteilhafterweise jeweils an den engsten und weitesten Stellen des Balges angeordnet.

Bei dem erfindungsgemäßen Antrieb des Trennteils mittels einer Gewindeübertragung besteht die Antriebseinrichtung zweckmäßigerweise aus einer Drehantriebseinrichtung, wobei das Übertragungsteil mit dem Rotor der Drehantriebseinrichtung verbunden oder durch den Rotor der Drehantriebseinrichtung gebildet ist. Die Drehantriebseinrichtung ist dabei zweckmäßigerweise ein Drehschrittmotor, der eine genaue Bestimmung der Drehrichtung und Drehgeschwindigkeit und damit der Dosiermenge pro Zeiteinheit ermöglicht.

Zur Vermeidung von Reibung in dem Gewindetrieb steht das Außengewinde des Trennteils zweckmäßigerweise mit dem Innengewinde des Übertragungsteils über Wälzkörper in Eingriff.

Gemäß einer Ausführungsform können die Wälzkörper Kugeln sein, zu denen das Außengewinde und das Innengewinde komplementär ausgebildet sind. Bei dieser Ausführungsform bilden das Trennteil und das Übertragungsteil einen Kugelgewindetrieb, der reibungsarm und geräuscharm arbeitet. Entsprechend den jeweiligen Anforderungen kann der Kugelgewindetrieb eine externe Kugelrückführung oder eine interne Kugelrückführung aufweisen.

Es ist aber auch möglich, daß das Übertragungsteil ein Innengewinde und das Trennteil radiale Rillen aufweist, wobei das Innengewinde und die radialen Rillen das Profil von Spitzgewinden haben, und daß die Wälzkörper rollenförmig ausgebildet sind und radiale Rillen aufweisen, deren Profil zu den Profilen des Innengewindes und der radialen Rillen komplementär ausgebildet ist. Bei dieser Ausführungsform ist ein Rollengewindetrieb gebildet, der ebenfalls reibungsarm und geräuscharm arbeitet.

Anhand der Zeichnung soll die Erfindung an Ausführungsbeispielen näher erläutert werden.
- Fig. 1: zeigt im Schnitt ein Ausführungsbeispiel der Dosierpumpe gemäß der Erfindung ohne Antriebseinrichtung,
- Fig. 2: zeigt die Dosierpumpe gemäß Fig. 1 in Ansaugstellung,
- Fig. 3: zeigt die Dosierpumpe gemäß Fig. 1 bei Ende des Förderhubes,
- Fig. 4: zeigt eine erste Abwandlung des Ausführungsbeispieles gemäß Fig. 1,
- Fig. 5: zeigt eine zweite Abwandlung des Ausführungsbeispieles gemäß Fig. 1,
- Fig. 6: zeigt eine dritte Abwandlung des Ausführungsbeispieles gemäß Fig. 1,
- Fig. 7: zeigt die Ausführungsform gemäß Fig. 5 zusammen mit einer ersten Ausführungsform einer Antriebseinrichtung,
- Fig. 8: zeigt das Ausführungsbeispiel gemäß Fig. 5 zusammen mit einer zweiten Ausführungsform einer Antriebseinrichtung,
- Fig. 9: zeigt in Einzeldarstellung eine Abwandlung des Antriebseinrichtung gemäß Fig. 8 im Axialschnitt,
- Fig. 10: zeigt die Antriebseinrichtung gemäß Fig. 9 im Radialschnitt und
- Fig. 11: zeigt das Ausführungsbeispiel gemäß Fig. 5 zusammen mit einer dritten Ausführungsform einer Antriebseinrichtung.

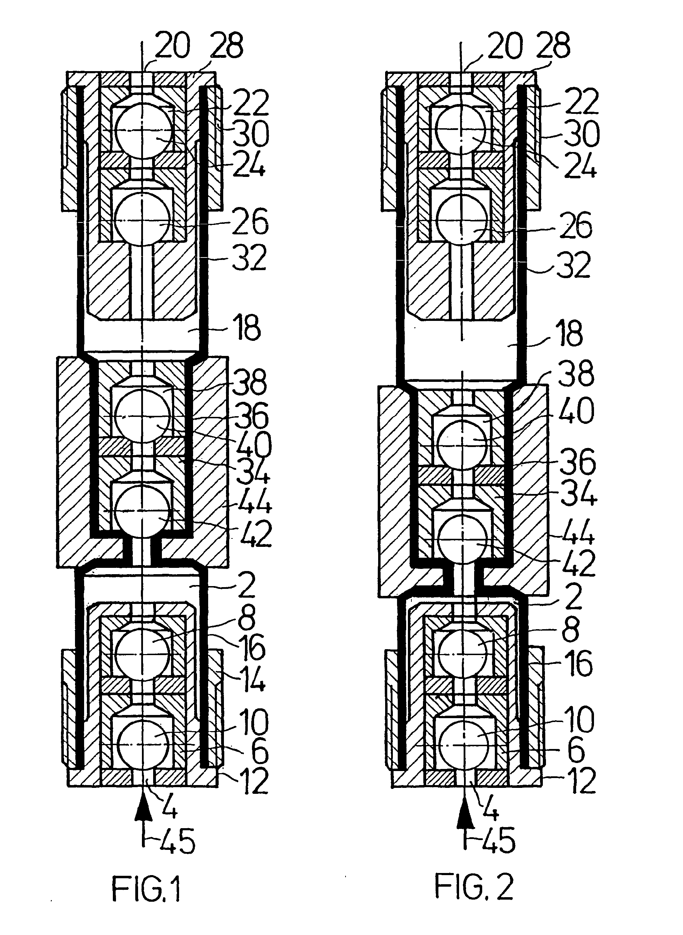

Fig. 1 zeigt einen Schnitt durch eine Dosierpumpe gemäß der Erfindung, bei der aus Gründen der Übersichtlichkeit eine Antriebseinrichtung weggelassen ist. Die Dosierpumpe weist eine Teilkammer 2 auf, in die ein Einlaß 4 über ein Einlaßventil 6 mit zwei Ventilkugeln 8 und 10 führt. Das Einlaßventil 6 ist in einem zylindrischen Einlaßteil 12 angeordnet. Zwischen dem Einlaßteil 12 und einem zylindrischen Klemmteil 14 ist das freie Ende eines Schlauchteils 16 dicht eingeklemmt, das die Außenwandung der Teilkammer 2 bildet.

Dieser so gebildeten Einlaßseite der Dosierpumpe liegt eine in gleicher Weise gestaltete Auslaßseite gegenüber, die eine Teilkammer 18 aufweist, aus der ein Auslaß 20 über ein Auslaßventil 22 mit Ventilkugeln 24 und 26 zu einer nicht dargestellten Auslaßleitung führt. Das Auslaßventil 22 ist in einem Auslaßteil 28 gebildet, zwischen dem und einem umgebenden zylindrischen Klemmteil 30 das freie Ende eines Schlauchteils 32 dicht eingeklemmt ist. Das Schlauchteil 32 bildet die äußere Wandung der Teilkammer 18.

Zwischen der Teilkammer 2 und der Teilkammer 18 ist ein Trennteil 34 angeordnet, das dicht mit einem mittleren Schlauchteil 36 verbunden ist, das zusammen mit den Schlauchteilen 16 und 32 aus einem Stück besteht. In dem Trennteil 34 ist ein Trennventil 38 mit zwei Ventilkugeln 40 und 42 gebildet. Das Schlauchteil 36 ist zur dichten und kraftschlüssigen Verbindung mit dem Trennteil 34 von einem Antriebsteil 44 umgeben. In der in Fig. 1 dargestellten Lage befindet sich das Antriebsteil 44 mit dem inneren Trennteil 34 in gleichem Abstand zwischen dem Einlaßteil 12 und dem Auslaßteil 28.

Bei Betrieb der dargestellten Dosierpumpe wird das Antriebsteil 44 durch eine in dieser Darstellung nicht gezeigte Antriebseinrichtung zwischen dem Einlaßteil 12 und dem Auslaßteil 28 hin- und herbewegt, so daß jeweils die Teilkammer 2 vergrößert und die Teilkammer 18 verkleinert und bei dem entgegengesetzten Hub die Teilkammer 2 verkleinert und die Teilkammer 18 vergrößert wird.

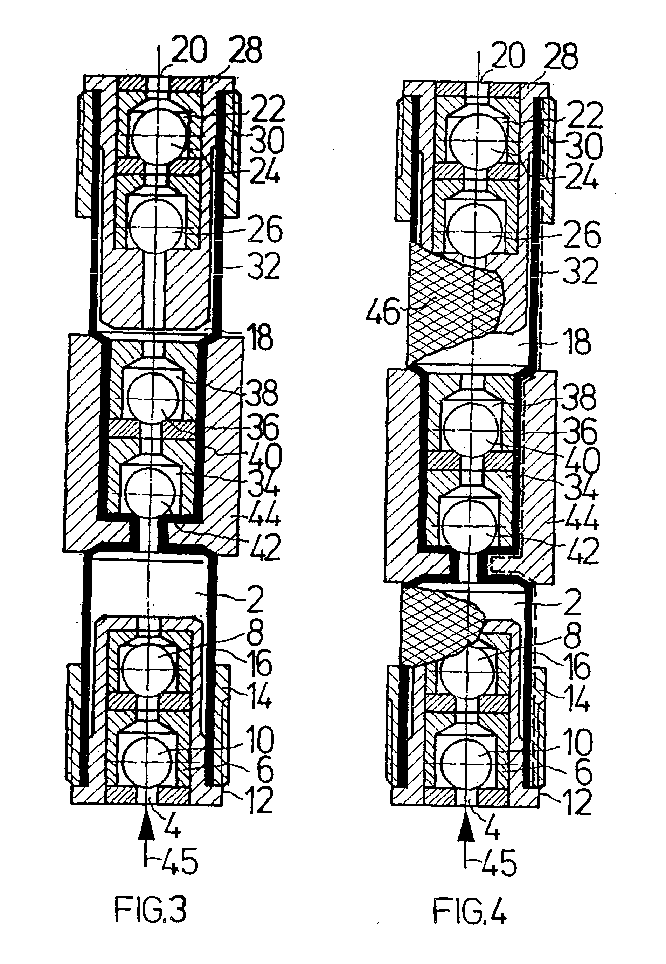

Fig. 2 zeigt die Dosierpumpe gemäß Fig. 1 in einer Lage, in der die Teilkammer 2 groß und die Teilkammer 18 klein ist. Zur Abgabe von Dosierflüssigkeit aus dem Auslaß 20 wird das Antriebsteil 44 mit dem Trennteil 34 schnell in einer in der Zeichnung durch einen Pfeil 45 symbolisierten Pump- bzw. Förderrichtung, also in Richtung auf das Auslaßteil 28 bewegt. Hierbei schließt das Trennventil 38, so daß Dosierflüssigkeit aus der Teilkammer 18 abtransportiert und aus dem Auslaß 20 ausgestoßen wird und gleichzeitig Dosierflüssigkeit in die Teilkammer 2 angesaugt wird. Die dann erreichte Endlage ist in Fig. 3 gezeigt. Es ist erkennbar, daß durch ständiges Hin- und Herbewegen des Antriebsteils 44 Dosierflüssigkeit in die Teilkammer 2 gesaugt und dabei Dosierflüssigkeit aus der Teilkammer 18 abtransportiert wird, während bei der entgegengesetzten Bewegungsrichtung des Antriebsteils 44, die zweckmäßigerweise schnell erfolgt, Dosierflüssigkeit aus der Teilkammer 2 in die Teilkammer 18 strömt. Entscheidend ist, daß bei Bewegung des Antriebsteils entgegen der Förderrichtung 45 die Dosierflüssigkeit weder durch das Einlaßventil 6 noch durch das Auslaßventil 22 bewegt wird und dabei wegen der schnellen Bewegung des Antriebsteils 44 nur kurzzeitig in Ruhe ist, abgesehen davon, daß sie aus der Dosierteilkammer 2 in die Teilkammer 18 durch das dann öffnende Trennventil 38 strömt.

Bei der entgegengesetzten Bewegung des Antriebsteils 44 in Richtung auf den Auslaß 20, also in Förderrichtung 45, erfolgt eine Förderung von Dosierflüssigkeit, indem sie in die Teilkammer 2 eingesaugt und aus der Teilkammer 18 herausbewegt wird. Da bei der Bewegung des Antriebsteils 44 in Richtung auf den Einlaß 4 die Dosierflüssigkeit in der Einlaßleitung und in der Auslaßleitung in Ruhe ist, entstehen keine stoßartigen Förderbewegungen mit der Folge einer großen Laufruhe. Da bei der Bewegung des Antriebsteils 44 in Richtung auf den Einlaß 4, abgesehen von dem Übertritt der Dosierflüssigkeit aus der Teilkammer 2 in die Teilkammer 18, keine Förderbewegung stattfindet, kann die entsprechende Bewegung des Antriebsteils 44 in gewünschter Weise sehr schnell erfolgen, so daß der gesamte Fördervorgang nur kurzzeitig unterbrochen ist. Damit ergibt sich insgesamt eine praktisch ununterbrochene gleichmäßige Förderbewegung, wie das bei Dosierpumpen erwünscht ist.

Fig. 4 ist mit der Darstellung in Fig. 1 identisch bis auf den Unterschied, daß die Schlauchteile 16 und 32 teilweise nicht geschnitten sind und so Kreuzgewebe 46 und 48 sichtbar sind, die ein Aufblähen der Schlauchteile 16 und 32 unter Druck vermeiden und somit bei Bewegung des Antriebsteils 44 lediglich eine Stauch- oder Dehnbewegung der Schlauchteile 16 und 32 stattfindet mit der Folge, daß die Änderung des Volumens der Teilkammern 2 und 18 und damit auch die geförderte Menge von Dosierflüssigkeit weitgehend proportional der Bewegung des Antriebsteils 44 ist.

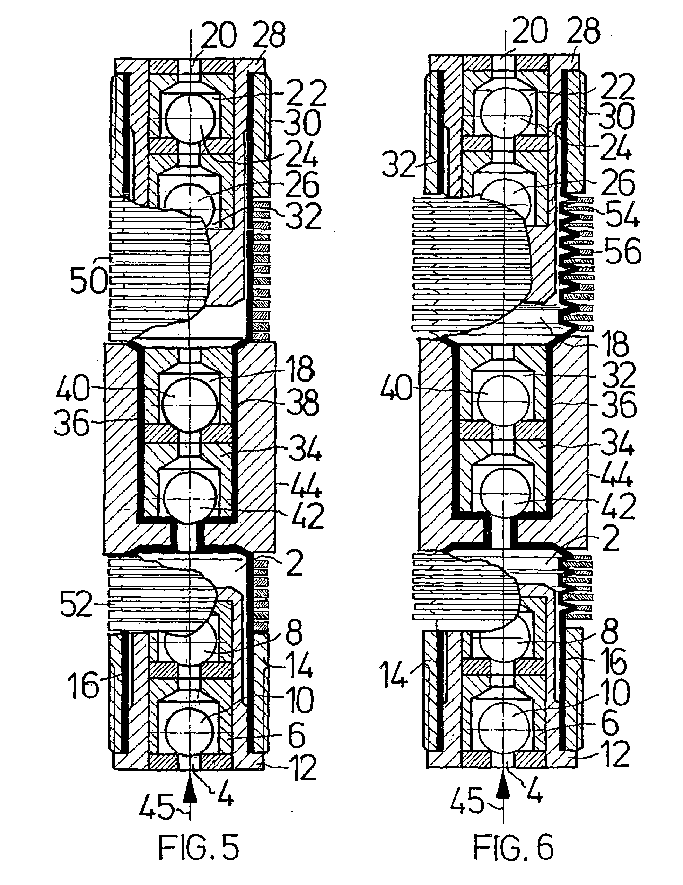

Fig. 5 zeigt in gleicher Darstellung die Dosierpumpe gemäß Fig. 1, gleiche Teile sind mit gleichen Bezugsziffern versehen. Ein Unterschied besteht darin, daß die Schlauchteile 16 und 32 teilweise nicht geschnitten sind, so daß Ringe 50 und 52 besser sichtbar sind, die die Schlauchteile 16 und 32 umgeben und mit diesen durch Vulkanisation verbunden sind. Diese Ringe 50 und 52 verhindern in gleicher Weise wie das Kreuzgewebe 46 in Fig. 4 ein Aufblähen der Schlauchteile 16 und 32, gleichzeitig aber auch ein Zusammenziehen dieser Schlauchtteile 16 und 32, so daß bei jeder Bewegung des Antriebsteils 44 die Änderung des Volumens der Teilkammern 2 und 18 genau proportional der Bewegung des Antriebsteils 44 ist.

Fig. 6 zeigt eine Abwandlung der Ausführungsform gemäß Fig. 5. Gleiche oder sich entsprechende Teile sind wieder mit gleichen Bezugsziffern versehen. Der Unterschied besteht darin, daß die Schlauchteile 16, 32 balgförmig ausgebildet sind, wobei Ringe 54 an den engsten Stellen und Ringe 56 an den weitesten Stellen des Balges angeordnet sind. Bei dieser Ausführungsform ist aufgrund der Balgförmigkeit der Schlauchteile 16, 32 eine besonders leichte Beweglichkeit in Bewegungsrichtung des Antriebsteils 44 gegeben.

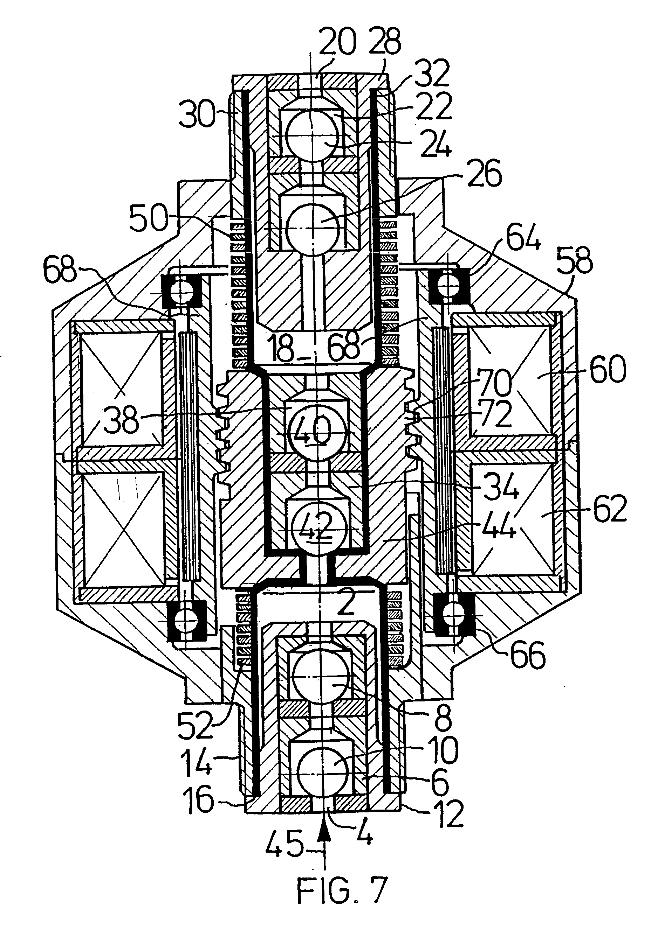

Fig. 7 zeigt eine Dosierpumpe in der Ausführungsform gemäß Fig. 5 zusammen mit einer Antriebseinrichtung, die einen auch als Dosen-Motor bezeichneten Drehschrittmotor 58 mit Erregerwicklungen 60, 62 und mit einem durch Kugellager 64, 66 gelagerten Rotor 68 aufweist, auf dessen zylindrischer Innenfläche sich ein Innengewinde 70 befindet, das mit einem Außengewinde 72 auf der entsprechend gestalteten Außenfläche des Antriebsteils 44 in Eingriff steht. Bei entsprechender Erregung des Drehschrittmotors 58 bewegt das Innengewinde 70 das Außengewinde 72 und damit auch das Antriebsteil 44 in eine von der Speisung abhängige Richtung, während bei entsprechend anderer Speisung eine Bewegung des Antriebsteils 44 in entgegengesetzter Richtung erfolgt. Durch ständiges Wechseln der Speise- und damit Drehrichtung des Drehschrittmotors wird somit das Antriebsteil 44 hin- und herbewegt und in der in Verbindung mit den Figuren 1 bis 3 grundsätzlich beschriebenen Weise Förderwirkung erzielt. Die Drehgeschwindigkeit des Drehschrittmotors und damit die Geschwindigkeit der Bewegung des Antriebsteils 44 in die beiden Richtungen kann in der gewünschten, in Verbindung mit den Figuren 1 bis 3 beschriebenen Weise gewählt und angepaßt werden.

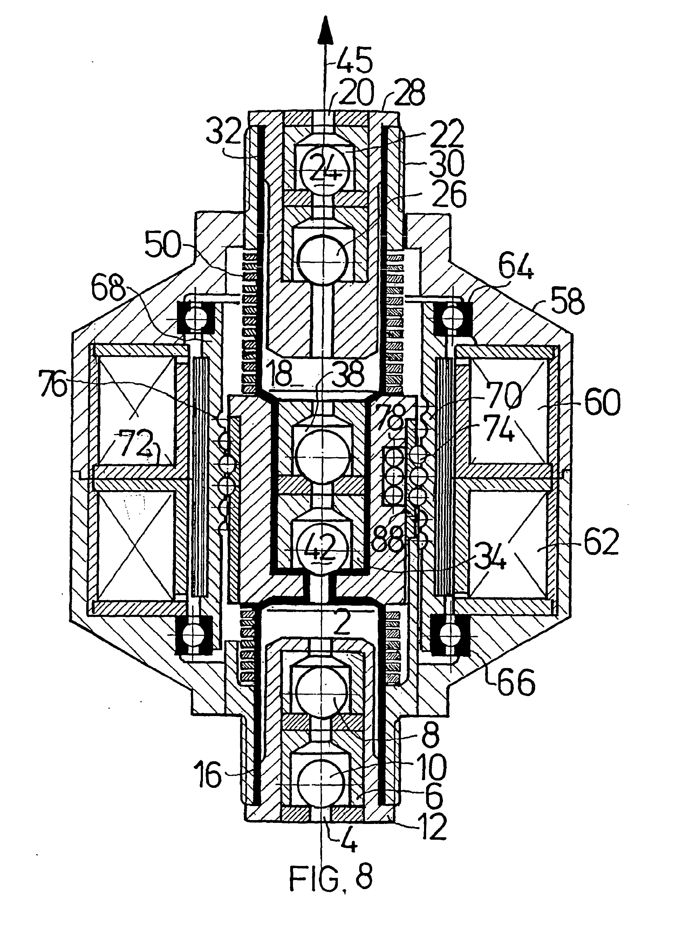

Fig. 8 zeigt in gleicher Weise wie Fig. 7 das Ausführungsbeispiel gemäß Fig. 5, jedoch mit einer zweiten Ausführungsform einer Antriebseinrichtung. Soweit Übereinstimmungen mit der Fig. 7 hinsichtlich der Verwendung des Drehschrittmotors 58 bestehen, sind gleiche Bezugsziffern verwendet. Der Unterschied bei der Ausführungsform gemäß Fig. 8 gegenüber der gemäß Fig. 7 besteht darin, daß die Gewindeübertragung durch als Kugeln 74 ausgebildete Wälzkörper erfolgt, die in entsprechend komplementär geformte Rillen 76 in dem Rotor 68 und 78 in einem Übertragungsteil 80 eingreifen, wobei in dem Übertragungsteil 80 in an sich bekannter Weise Durchbrüche vorgesehen sind, durch die die Kugeln in einen hinter dem Übertragungsteil 80 liegenden Raum 82 eintreten und jeweils in umgekehrter Richtung wandern können, so daß immer ein Umlauf der Kugeln 74 erfolgt.

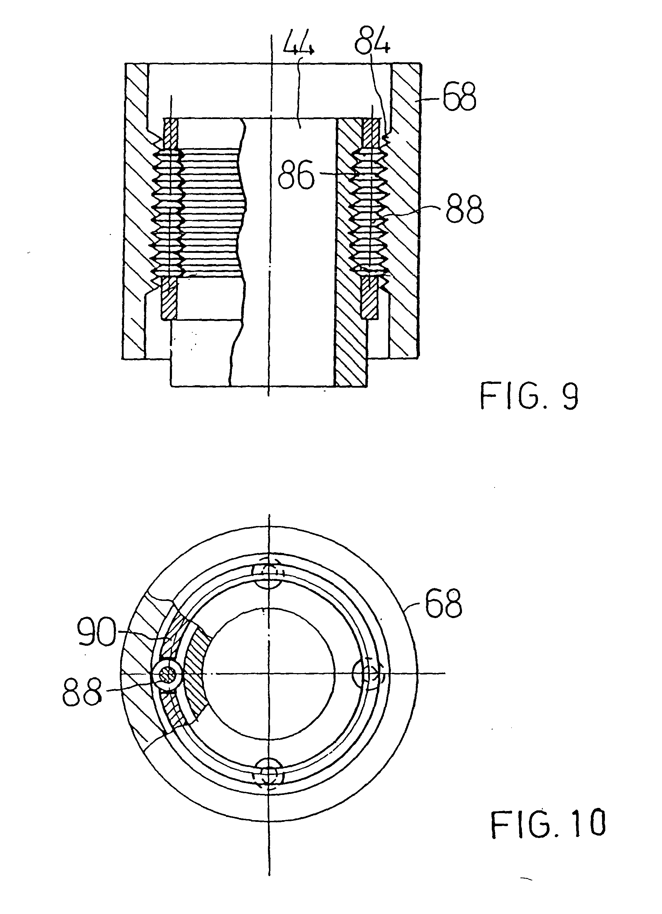

Fig. 9 zeigt in Einzeldarstellung im Querschnitt eine Abwandlung der Wälzkörperübertragung gemäß Fig. 8. Gleiche oder sich entsprechende Teile sind mit gleichen Bezugsziffern versehen. In der zylindrischen Innenfläche des Rotors 68 befindet sich ein Innengewinde 84, während sich auf der Außenfläche des Antriebsteils 44 radiale Rillen 86 befinden. Innengewinde 84 und Rillen 86 haben das Profil von Spitzgewinden. Zwischen dem Gewinde 84 und den Rillen 86 befinden sich im wesentlichen zylindrische, rollenförmige Wälzkörper 88, deren Umfangsflächen mit radialen Rillen versehen und zu den Profilen des Gewindes 84 und der Rillen 86 komplementär spitz ausgebildet sind, so daß bei Rotation des Rotors 68 sich die Wälzkörper 68 in den Gewindegängen abwälzen und dabei eine Axialbewegung des Antriebsteils 44 bewirken.

Fig. 10 ist ein Querschnitt durch die Darstellung gemäß Fig. 9. Es ist erkennbar, daß die rollenförmigen Wälzkörper 88 in Umfangsrichtung durch einen Käfig 90 im Abstand zueinander gehalten sind.

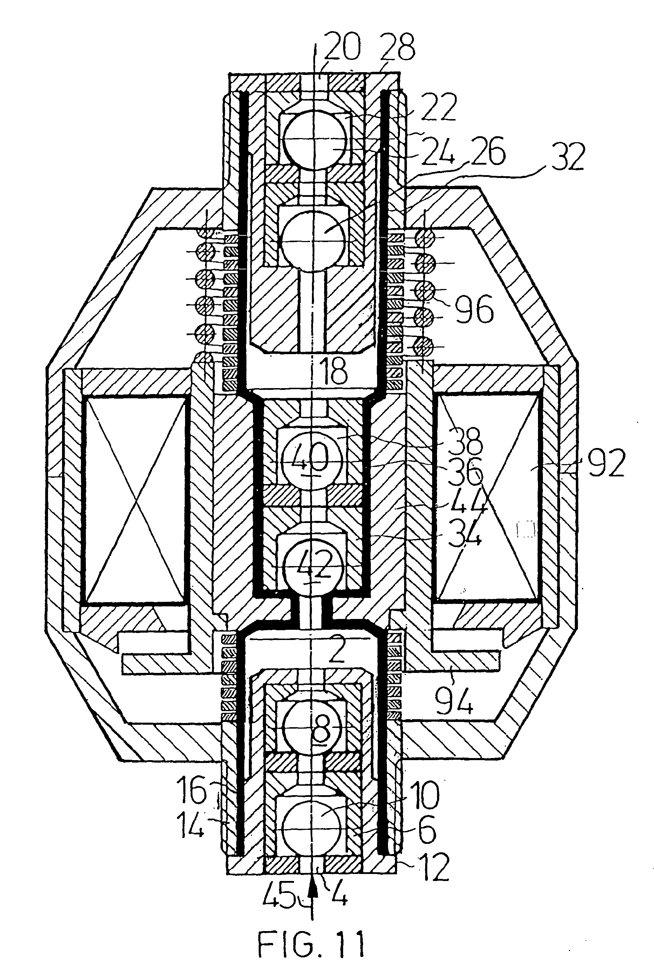

Fig. 11 zeigt das Ausführungsbeispiel gemäß Fig. 5 der Pumpe zusammen mit einer dritten Ausführungsform einer Antriebseinrichtung. Diese besteht in diesem Falle aus einem elektromagnetischen Zugmagneten mit einer Erregerspule 92 und einem Zuganker 94, der mit dem Antriebsteil 44 verbunden und durch eine Feder 96 entgegen der in der Zeichnung nach oben gerichteten Zugrichtung des Zugankers 94 vorgespannt ist.

Bei Erregung der Erregerspule 92 wird der Zuganker 94 nach oben entgegen der Kraft der Feder 96, also in Förderrichtung 45, gezogen und damit auch das Antriebsteil 44 zusammen mit dem Trennteil 34, so daß Dosierflüssigkeit aus dem Auslaß 45 aus der Teilkammer 18 ausgestoßen und gleichzeitig Dosierflüssigkeit durch den Einlaß 4 Dosierflüssigkeit in die Teilkammer 2 eingesaugt wird und so die Förderung von Dosierflüssigkeit bewirkt wird, wie das in Verbindung mit den Figuren 1 bis 3 beschrieben ist. Nach Entregung der Erregerspule 92 drückt die Feder 96 das Antriebsteil 44 mit dem Trennteil 34 in der Zeichnung nach unten in Richtung auf den Auslaß 4.

## Patentansprüche

1. Dosierpumpe,
- mit einer Kammer,
- mit einem Einlaßventil (6) in einem Einlaß (4) in die Kammer und mit einem Auslaßventil (28) in einem Auslaß (20) der Kammer,
- mit einem die Kammer in zwei Teilkammern (2, 18) unterteilenden, in Förderrichtung hin- und herbeweglichen und mit einer Antriebseinrichtung zur hin- und hergehenden Bewegung verbundenen Trennmittel und
- mit einem in dem Trennmittel angeordneten, die beiden Teilkammern (2, 18) verbindenden, in Förderrichtung öffnenden Trennventil (38),
- wobei die Teilkammern (2, 18) miteinander fluchtende, im wesentlichen zylindrische, in ihrer Ausdehnung in Achsrichtung längenveränderliche Außenwandungen aufweisen und
- wobei das Trennmittel durch ein mit den Außenwandungen dicht verbundenes Trennteil (34) gebildet ist, in dem vorzugsweise koaxial das Trennventil (38) angeordnet und mit dem die Antriebseinrichtung wirkungsverbunden ist,
**dadurch gekennzeichnet,**
- **daß** die im wesentlichen zylindrischen Außenwandungen der Teilkammern (2, 18) durch in Achsrichtung dehn- und/oder stauchbare Schlauchteile (16, 32) gebildet sind,
- **daß** das Trennteil aus hartem Material besteht und ein zur Förderrichtung koaxiales Außengewinde aufweist; das mit einem Innengewinde eines Übertragungsteils in Eingriff steht, das von der Antriebseinrichtung drehangetrieben ist, und
- **daß** Mittel zur wiederkehrenden Umkehr der Drehrichtung des Übertragungsteils vorgesehen sind.

2. Dosierpumpe nach Anspruch 1, **dadurch gekennzeichnet, daß** die Schlauchteile (16, 32) balgförmig sind.

3. Dosierpumpe nach Anspruch 1 oder 2, **dadurch gekennzeichnet, daß** die Schlauchteile (16, 32) in Umfangsrichtung nicht dehnbare Mittel aufweisen.

4. Dosierpumpe nach Anspruch 3, **dadurch gekennzeichnet, daß** die in Umfangsrichtung nicht dehnbaren Mittel durch eine in den Schlauchteilen (16, 32) angeordnete, in Umfangsrichtung nicht dehnbare Bewehrung gebildet sind.

5. Dosierpumpe nach Anspruch 4, **dadurch gekennzeichnet, daß** die Bewehrung durch ein Kreuzgewebe (46) gebildet ist.

6. Dosierpumpe nach Anspruch 3, **dadurch gekennzeichnet, daß** die nicht dehnbaren Mittel durch in axialem Abstand mit den zylindrischen Schlauchteilen (16, 32) verbundene Ringe (50, 52) gebildet sind.

7. Dosierpumpe nach Anspruch 6, **dadurch gekennzeichnet, daß** die Ringe (50, 52) auf der Außenseite der Schlauchteile (16, 32) angeordnet sind.

8. Dosierpumpe nach Anspruch 6, **dadurch gekennzeichnet, daß** die Ringe (50, 52) aus Metall bestehen und mit der Außenseite der Schlauchteile (16, 32) durch Vulkanisation verbunden sind.

9. Dosierpumpe nach Anspruch 7, **dadurch gekennzeichnet, daß** die Ringe (54, 56) bei balgförmiger Ausbildung der Schlauchteile (16, 32) jeweils an den engsten und weitesten Stellen angeordnet sind.

10. Dosierpumpe nach Anspruch 1, **dadurch gekennzeichnet, daß** die Antriebseinrichtung eine Drehantriebseinrichtung ist und daß das Übertragungsteil mit dem Rotor der Drehantriebseinrichtung verbunden oder durch den Rotor der Drehantriebseinrichtung gebildet ist.

11. Dosierpumpe nach Anspruch 1, **dadurch gekennzeichnet, daß** die Drehantriebseinrichtung durch einen Drehschrittmotor gebildet ist.

12. Dosierpumpe nach Anspruch 1, **dadurch gekennzeichnet, daß** das Außengewinde des Trennteils mit dem Innengewinde des Übertragungsteils über Wälzkörper in Eingriff steht.

13. Dosierpumpe nach Anspruch 12, **dadurch gekennzeichnet, daß** die Wälzkörper Kugeln sind und das Außengewinde und das Innengewinde dazu komplementär ausgebildet sind.

14. Dosierpumpe nach Anspruch 12, **dadurch gekennzeichnet, daß** das Übertragungsteil ein Innengewinde und das Trennteil radiale Rillen aufweist, wobei das Innengewinde und die radialen Rillen das Profil von Spitzgewinden haben, und daß die Wälzkörper rollenförmig ausgebildet sind und radiale Rillen aufweisen, deren Profil zu den Profilen des Innengewindes und der radialen Rillen des Trennteiles komplementär ausgebildet ist.

## Claims

1. Dosing pump,
- with a chamber
- with an inlet valve (6) in an inlet (4) into the chamber and an outlet valve (28) in an outlet (20) of the chamber,
- with a separation means that divides the chamber into two partial chambers (2, 18) and can be moved back and forth in conveying direction and connected with a drive device for the back and forth movement and
- with a separation valve (38) arranged in the separation means, that connects the two partial chambers (2, 18) and opens in conveying direction,
- whereby the partial chambers (2, 18) have aligning, essentially cylindrical external walls that can be changed in length in their extension in axial direction and
- whereby the separation means are formed by a separation part (34) tightly connected to the external walls, in which preferably coaxially the separation valve (38) is arranged and with which the drive device is connected,
**characterised in that**
- the essentially cylindrical outer walls of the partial chambers (2, 18) are comprised of tube parts (16, 32) that are extensible and/or compressible in axial direction,
- **in that** the separation means is made from a hard material and comprises an external thread coaxial to the conveying direction, which is in engagement with an internal thread of a transmission part that is rotary driven by the drive device and
- **in that** means are provided for the repetitive reversal of the direction of rotation of the transmission part.

2. Dosing pump according to claim 1, **characterised in that** the tube parts (16, 32) are in the form of bellows.

3. Dosing pump according to claim 1 or 2, **characterised in that** the tube parts (16, 32) comprise means which are not extensible in circumferential direction.

4. Dosing pump according to claim 3, **characterised in that** the means which are not extensible in circumferential direction are formed by a reinforcement not extensible in circumferential direction arranged in the tube parts (16, 32).

5. Dosing pump according to claim 4, **characterised in that** the reinforcement is in the form of a cross web (46).

6. Dosing pump according to claim 3, **characterised in that** the non-extensible means are formed by rings (50, 52) connected at an axial distance to the cylindrical tube parts (16, 32).

7. Dosing pump according to claim 6, **characterised in that** the rings (50, 52) are arranged on the outside of the tube parts (16, 32).

8. Dosing pump according to claim 6, **characterised in that** the rings (50, 52) are made of metal and are connected to the outside of the tube parts (16, 32) by vulcanisation.

9. Dosing pump according to claim 7, **characterised in that** with a bellows-shaped design of the tube parts (16, 32) the rings (54, 56) are arranged respectively at the narrowest and widest points.

10. Dosing pump according to claim 1, **characterised in that** the drive device is a rotary drive device and **in that** the transmission part is connected with the rotor of the rotary drive device or is formed by the rotor of the rotary drive device.

11. Dosing pump according to claim 1, **characterised in that** the rotary drive device is in the form of a rotary stepping motor.

12. Dosing pump according to claim 1, **characterised in that** the external thread of the separation part is in engagement with the internal thread of the transmission part via roller elements.

13. Dosing pump according to claim 12, **characterised in that** the roller elements are balls and the external thread and the internal thread are designed to be complementary thereto.

14. Dosing pump according to claim 12, **characterised in that** the transmission part comprises an internal thread and the separation part has radial grooves, whereby the internal thread and the radial grooves have the profile of V-threads, and **in that** the roller elements are roller-shaped and comprise radial grooves, the profile of which is designed to be complementary to the profiles of the internal thread and the radial grooves of the separation part.

## Revendications

1. Pompe de dosage
- comprenant un compartiment;
- comprenant une soupape d'admission (6) dans une admission (4) dans le compartiment et comprenant une soupape de sortie (28) dans une sortie (20) du compartiment ;
- comprenant un moyen de séparation divisant le compartiment en deux parties de compartiment (2, 18), pouvant effectuer un mouvement de va-et-vient dans la direction de transport et relié à un dispositif d'entraînement pour le mouvement de va-et-vient; et
- comprenant une soupape de séparation (38) agencée dans le moyen de séparation, reliant les deux parties du compartiment (2, 18) et s'ouvrant dans la direction de transport ;
- où les parties du compartiment (2, 18) présentent des parois extérieures alignées entre elles, sensiblement cylindriques et de longueurs variables dans leur extension dans la direction axiale ; et
- où le moyen de séparation est formé par une partie de séparation (34) reliée de façon étanche avec les parois extérieures, dans laquelle la soupape de séparation (38) est agencée de préférence en position coaxiale et avec laquelle le dispositif d'entraînement est relié de façon fonctionnelle ;
**caractérisée:**
- **en ce que** les parois extérieures sensiblement cylindriques des parties du compartiment (2, 18) sont formées par des parties de tuyaux (16; 32) pouvant être étirées et/ou refoulées dans la direction axiale;
- **en ce que** la partie de séparation est constituée d'un matériau dur et présente un filetage extérieur coaxial avec la direction de transport, qui est en engagement avec un filetage intérieur d'une partie de transmission qui est entraînée en rotation par le dispositif d'entraînement ; et
- **en ce que** des moyens sont prévus pour l'inversion réversible du sens de rotation de la partie de transmission.

2. Pompe de dosage selon la revendication 1, **caractérisée en ce que** les parties de tuyaux (16, 32) ont une forme de soufflet.

3. Pompe de dosage selon la revendication 1 ou 2, **caractérisée en ce que** les parties de tuyaux (16, 32) présentent des moyens ne pouvant pas être étirés dans le sens périphérique.

4. Pompe de dosage selon la revendication 3, **caractérisée en ce que** les moyens ne pouvant pas être étirés dans le sens périphérique sont formés par une armature agencée dans les parties de tuyaux (16, 32) ne pouvant pas être étirée dans le sens périphérique.

5. Pompe de dosage selon la revendication 4, **caractérisée en ce que** l'armature est formée par un tissage croisé (46).

6. Pompe de dosage selon la revendication 3, **caractérisée en ce que** les moyens ne pouvant pas être étirés sont formés par des bagues (50, 52) reliées avec les parties de tuyaux cylindriques (16, 32) à une distance axiale.

7. Pompe de dosage selon la revendication 6, **caractérisée en ce que** les bagues (50, 52) sont agencées sur le côté extérieur des parties de tuyaux (16, 32).

8. Pompe de dosage selon la revendication 6, **caractérisée en ce que** les bagues (50, 52) sont constituées de métal et sont reliées avec le côté extérieur des parties de tuyaux (16, 32) par vulcanisation.

9. Pompe de dosage selon la revendication 7, **caractérisée en ce que**, dans une configuration en forme de soufflet des parties de tuyaux (16, 32), les bagues (54, 56) sont agencées respectivement aux points les plus étroits et les plus larges.

10. Pompe de dosage selon la revendication 1, **caractérisée en ce que** le dispositif d'entraînement est un dispositif d'entraînement rotatif et **en ce que** la partie de transmission est reliée avec le rotor du dispositif d'entraînement rotatif ou est formée par le rotor du dispositif d'entraînement rotatif.

11. Pompe de dosage selon la revendication 1, **caractérisée en ce que** le dispositif d'entraînement rotatif est formé par un moteur à pas de rotation.

12. Pompe de dosage selon la revendication 1, **caractérisée en ce que** le filetage extérieur de la partie de séparation est en engagement avec le filetage intérieur de la partie de transmission par le biais de corps de roulement.

13. Pompe de dosage selon la revendication 12, **caractérisée en ce que** les corps de roulement sont des billes et **en ce que** le filetage extérieur et le filetage intérieur sont réalisés de façon complémentaire à celles-ci.

14. Pompe de dosage selon la revendication 12, **caractérisée en ce que** la partie de transmission présente un filetage intérieur et la partie de séparation des rainures radiales, le filetage intérieur et les rainures radiales ayant le profil de filets triangulaires, et **en ce que** les corps de roulement sont réalisées en forme de rouleaux et présentent des rainures radiales dont le profil est réalisé de façon complémentaire aux profils du filetage intérieur et des rainures radiales de la partie de séparation.
